# EUROPEAN PATENT APPLICATION

(11) **EP 4 324 879 A1**
(43) Date of publication of application: **21.02.2024**
(21) Application number: 22803626.5
(22) Date of filing: 23.03.2022
(51) Int. Cl.: C08L 23/14, C08L 23/16, C08L 23/06, C08L 23/08, C08L 53/00

(54) **POLYPROPYLENE COMPOSITE MATERIAL CAPABLE OF BLASTING AT LOW TEMPERATURE, AND PREPARATION METHOD THEREFOR AND APPLICATION THEREOF**

(30) Priority: 18.05.2021 CN 202110542310
(71) Applicant: KINGFA SCI. & TECH. CO., LTD., Guangzhou, Guangdong 510663 (CN)
(72) Inventor: QIAN, Zhijun, Guangzhou, Guangdong 510663 (CN); CHEN, Pingxu, Guangzhou, Guangdong 510663 (CN); HUANG, Xianbo, Guangzhou, Guangdong 510663 (CN); YU, Fei, Guangzhou, Guangdong 510663 (CN); TANG, Yuhang, Guangzhou, Guangdong 510663 (CN); GUO, Tanghua, Guangzhou, Guangdong 510663 (CN)
(74) Representative: dompatent von Kreisler Selting Werner - Partnerschaft von Patent- und Rechtsanwälten mbB
(86) International application number: PCT/CN2022/082398
(87) International publication number: WO 2022/242297

(57) **Abstract**

Disclosed are a polypropylene composite material capable of cracking at a low temperature, and a preparation method therefor and use thereof. The polypropylene composite material comprises the following components in parts by weight: 35-75 parts of special polypropylene A, 3-10 parts of special polypropylene B, 15-30 parts of a filler, 2-10 parts of a special toughening agent, 15-25 parts of a toughening agent, 0.1-0.3 part of a lubricant, 0.1-0.3 part of a photo stabilizer, and 0.2-0.6 part of an antioxidant, wherein the special toughening agent comprises ultrahigh molecular weight polyethylene and a metallocene ethylene-propylene copolymer. The polypropylene composite material that is capable of cracking at a low temperature and has good rigidity is prepared by using the special polypropylene A, the special polypropylene B, and the special toughening agent in combination with the normal filler and the normal toughening agent, and the polypropylene composite material has a wide application prospect (for example, in automotive interior parts such as a bare column capable of cracking at a low temperature).

## Description

### Technical Field

The present invention belongs to the technical field of polypropylene composite materials, and particularly relates to a polypropylene composite material capable of cracking at a low temperature, and a preparation method therefor and use thereof.

### Background Art

An air bag restraint system is integrated in an automotive column that serves as an automotive interior part, and then passengers in the automobile can be protected when suffered from accidental impact. Therefore, a column material must meet certain low-temperature impact resistance. Conventional automotive column material is generally prepared by blending polypropylene, talcum powder and a thermoplastic elastomer, has poor low-temperature resistance and low toughness, and cannot meet requirements and standards of automotive interior parts.

In the current modified polypropylene industry, a formula system of the column material is mostly composed of talcum powder, ordinary ethylene-propylene block co-polypropylene (having a polydispersity index PDI of 2 - 5), a conventional toughening agent POE (an ethylene-octene random copolymer), an antioxidant, a lubricant and a photo stabilizer. In the publication CN111763399A, toughening modification on polypropylene is performed in combination with high density polyethylene and the ethylene-octene random copolymer. However, although material toughness is increased (notch impact strength of a cantilever beam is 49 KJ/m²), rigidity (such as, tensile strength of 16.7 MPa, bending strength of 22.3 MPa and bending modulus of 1530 MPa) is not significantly increased. A polypropylene composite material disclosed in the prior art does not have comprehensive performances of satisfactory low-temperature impact toughness and high rigidity.

Therefore, developing a bare column material that is capable of cracking at a low temperature and high in rigidity has important research significance and economic value.

### Summary of the Invention

To overcome the defect in the prior art that comprehensive performances of low-temperature impact toughness and high rigidity of an automotive column material cannot be ensured simultaneously, a purpose of the present invention is to provide a polypropylene composite material. In the present invention, the polypropylene composite material that meets a requirement of cracking at a low temperature of -35°C and has high rigidity is prepared by taking ultrahigh molecular weight polyethylene and a metallocene ethylene-propylene copolymer of a specific ratio as a special toughening agent and matching with special polypropylene A and special polypropylene B.

Another purpose of the present invention is to provide a preparation method of the above polypropylene composite material.

Another purpose of the present invention is to provide use of the above polypropylene composite material in preparation of an automotive bare column material.

To achieve the above purposes, technical solutions of the present invention are as follows:
A polypropylene composite material includes the following components in parts by weight: 35-75 parts of special polypropylene A, 3-10 parts of special polypropylene B, 15-30 parts of a filler, 2-10 parts of a special toughening agent, 15-25 parts of a toughening agent, 0.1-0.3 part of a lubricant, 0.1-0.3 part of a photo stabilizer, and 0.2-0.6 part of an antioxidant.

The special polypropylene A is binary block co-polypropylene synthesized from ethylene and propylene.

The special polypropylene B is ternary random co-polypropylene synthesized from 1-butene, ethylene and propylene.

The special toughening agent is compounded by ultrahigh molecular weight polyethylene and a metallocene ethylene-propylene copolymer according to a mass ratio of (2-9):1, wherein the molecular weight of the ultrahigh molecular weight polyethylene is not less than 1 million.

In the patent CN111763399A, a compound of polypropylene A and polypropylene B serves as a base material of modified PP and may meet requirements of excellent appearance and low-temperature cracking performance. Meanwhile, toughening modification on polypropylene is performed by using high density polyethylene and a conventional toughening agent of ethylene-octene random copolymer, so that glossiness and low-temperature toughness of the material may be improved, and great benefits are brought for the appearance and low-temperature cracking of the composite material. However, it can be seen from performance test results of the material that, although material appearance and material toughness are improved, rigidity of the material (such as tensile strength and bending strength) is not significantly increased.

The ultrahigh molecular weight polyethylene (UHMWPE) refers to polyethylene having relative molecular weight of more than 1 million, and is a novel engineering plastic having the most excellent comprehensive performance in engineering plastics. Molecular structure arrangement of the UHMWPE is identical to that of ordinary polyethylene. However, because of the extremely high relative molecular weight, the UHMWPE has many excellent performances that are not owned by ordinary polyethylene materials, such as excellent wear resistance, extremely high impact strength, foreign body adhesion difficulty and excellent adhesion resistance during sliding. Due to excellent tensile strength and elongation at break, impact strength of the UHMWPE is 1.5 times higher than that of polycarbonate. Further, the UHMWPE has high compatibility to co-polypropylene containing ethylene chains, and has significant effects during blending modification.

The metallocene ethylene-propylene copolymer includes a major component of propylene and has low ethylene content. The polymer is extremely low in crystallinity, has excellent amorphous characteristics, and shows excellent elasticity that cannot be obtained by any other olefin elastomer materials. As a novel elastomer, the metallocene ethylene-propylene copolymer may be well applied to polypropylene modification for enhancing elasticity and toughness of the polypropylene.

In the technical solutions of the present invention, the polypropylene is subjected to toughening modification by taking a compound of the ultrahigh molecular weight polyethylene and the metallocene ethylene-propylene copolymer according to a specific ratio as a special toughening agent. The ultrahigh molecular weight polyethylene has high molecular weight and achieves a network interweaving effect in the composite material, so that the toughness of the composite material may be increased. Further, the metallocene ethylene-propylene copolymer may achieve a compatilizer effect of the polypropylene and polyethylene, and further enhances comprehensive performances of the composite material, particularly the rigidity.

In the present invention, the polypropylene is subjected to toughening modification by taking the special polypropylene A and the special polypropylene B as the base material for modifying PP and taking the compound of the ultrahigh molecular weight polyethylene and the metallocene ethylene-propylene copolymer according to the specific ratio as the special toughening agent. Therefore, the prepared polypropylene composite material has high rigidity (such as tensile strength and bending strength) and low-temperature cracking performance, and can be applied to automotive bare column materials.

Preferably, the polypropylene composite material includes the following components in parts by weight: 40-45 parts of special polypropylene A, 5-6 parts of special polypropylene B, 20-25 parts of a filler, 3-5 parts of a special toughening agent, 15-20 parts of a toughening agent, 0.1-0.2 part of a lubricant, 0.1-0.2 part of a photo stabilizer, and 0.2-0.4 part of an antioxidant.

Preferably, the molecular weight of the ultrahigh molecular weight polyethylene is 1-3 million. Preferably, the metallocene ethylene-propylene copolymer has an ethylene content of 9-15%. Preferably, the special polypropylene A has a polydispersity index PDI of 6-10.

Preferably, the special polypropylene B has a melting temperature (Tm) of 130-135°C.

Preferably, a mass ratio of the ultrahigh molecular weight polyethylene to the metallocene ethylene-propylene copolymer in the special toughening agent is (8-9): 1.

Preferably, the filler is one or more of talcum powder and basic magnesium sulfate whisker.

Preferably, the toughening agent is one or more of an ethylene-octene random copolymer and an ethylene-octene block copolymer.

Preferably, the lubricant is one or more of amides and stearates; the antioxidant is one or more of hindered phenols and phosphite esters; and the photo stabilizer is a hindered amine.

The present invention further provides a preparation method of the polypropylene composite material. The preparation method includes the following steps:
weighing special polypropylene A, special polypropylene B, a special toughening agent, a conventional toughening agent, a photo stabilizer, a lubricant and an antioxidant to be uniformly mixed; then adding a filler; and after the components are uniformly mixed, performing melt blending, extruding and granulating on the obtained mixture.

Use of the polypropylene composite material in preparation of an automotive bare column material is also in the protection scope of the present invention.

Compared with the prior art, the present invention has beneficial effects as follows:
(1) In the present invention, the compound of the special polypropylene A and the special polypropylene B serves as the base material of modified polypropylene, so that low-temperature cracking performance of the material may be increased.
(2) In the present invention, the polypropylene is modified by taking the compound of the ultrahigh molecular weight polyethylene and the metallocene ethylene-propylene copolymer as the special toughening agent, so that the rigidity and low-temperature cracking performance of the material may be increased simultaneously.
(3) In the present invention, due to simultaneous use of the special polypropylene A, the special polypropylene B and the compounded special toughening agent, the prepared polypropylene composite material has excellent rigidity and low-temperature cracking performance, and can be applied to the automotive bare column material. Moreover, the composite material is simple in production process and suitable for mass production.

### Detailed Description of the Invention

The present invention is further illustrated below in combination with embodiments. These embodiments are only used for describing the present invention, not for limiting the protection scope of the present invention. Experimental methods in which specific conditions are not specified in the following embodiments are carried out usually under conventional conditions in the field or the conditions recommended by the manufacturer. The raw materials and reagents used are commercially available from conventional markets unless otherwise specified. Any immaterial change and replacement made by those skilled in the art on the basis of the present invention fall within the protection scope claimed by the present invention.

Various embodiments of the present invention and partial reagents used in comparative examples are described below:
Special polypropylene A:
   Model: X1956A (PDI=6) Manufacturer: Lyondell Basell
   Model: BI871 (PDI=7.5) Manufacturer: Hanwha Total
Special polypropylene B:
   Model: C5608 (Tm=130°C) Manufacturer: Sinopec
   Model: ADSYL 6089 (Tm=133°C) Manufacturer: Lyondell Basell
Ordinary co-polypropylene:
   Model: EP648U (PDI=3.8) Manufacturer: CNOOC and Shell Petrochemicals Company Limited.
Special toughening agent:
   Model of UHMWPE: U010P (having molecular weight of 1 million) Manufacturer: Korea Petrochemical Industry Co., Ltd.
   Model of UHMWPE: 9300GK1 (having molecular weight of 3 million) Manufacturer: Sinopec
   Model of metallocene ethylene-propylene copolymer: Vistamaxx 6202 having ethylene content of 15% Supplier: ExxonMobil
   Model of metallocene ethylene-propylene copolymer: Vistamaxx3980FL having ethylene content of 9% Supplier: ExxonMobil
Toughening agent: ethylene-octene random copolymer (POE):
   Model: Engage 8842 Manufacturer: DOW Chemical
Talcum powder:
   Model: HTPultra5L Manufacturer: IMIFABI
Antioxidant: hindered phenol
   Model: 1010 Manufacturer: Shandong Sanfeng Group
Photo stabilizer: hindered amine
   Model: UV-3808PP5 Manufacturer: Solvay (Belgium)
Lubricant: zinc stearate
   Model: BS-2818 Manufacturer: Belike Chemical Co., Ltd.

A polypropylene composite material in various embodiments and comparative examples of the present invention is prepared as follows:
Raw materials including special polypropylene A, special polypropylene B, a special toughening agent, a toughening agent, a photo stabilizer, a lubricant, an antioxidant and ordinary co-polypropylene (if any) were weighed according to component ratios; the raw materials were mixed in a high-speed mixer for 43-5 min, wherein a rotation speed of the high-speed mixer was 200-300250 revolutions per minute; then a filler was weighed to be added into the high-speed mixer for mixing for 53-5 min, wherein the rotation speed of the high-speed mixer was 200-300 revolutions per minute; and after the components were uniformly mixed, the mixer was added into a twin-screw extruder to be subjected to melt blending, extruding and granulation. The temperature of the twin-screw extruder is sequentially 170°C, 200°C, 200°C, 210°C, 210°C, 205°C, 205°C, 205°C, 200°C and 200°C from a feeding section to the machine head. During extrusion, a double vacuum process is adopted, and a vacuum degree is required to be ≤ -0.08 MPa.

Performance test methods and standards of the polypropylene composite material in various embodiments and comparative examples of the present invention are as follows:
(1) Density: ISO 1183-1-2012 standard is adopted;
(2) tensile strength: test is performed according to ISO 527-2-201, and a tensile speed is 50 mm/min;
(3) bending property: the sample is subjected to injection molding to obtain mechanical sample strips; test is performed according to ISO 178-2010; and a bending speed is 2 mm/min;
(4) notch impact strength of a cantilever beam: test is performed according to ISO 180-2000;
(5) multi-axis impact at a low temperature of -35°C: test is performed with reference to ISO 6603-2-2000 standard (evaluation of a square slab having a thickness of 2 mm; an impact speed of 4.4 m/s; it is generally thought that, the cracking requirement may be met if a destruction form is YD&YS, and the cracking requirement is not met if the destruction form is YU&NY).

### Embodiments 1-10

The present embodiments provide a series of polypropylene composite materials, and formulas of the materials are shown as Table 1.

**Table 1 Formulas of embodiments 1-10**

| Embodiments | | 1 | 2 | 3 | 4 | 5 | 6 | 7 | 8 | 9 | 10 |
|---|---|---|---|---|---|---|---|---|---|---|---|
| Special polypropylene A | BI871 | 42 | / | 42 | 42 | 42 | 42 | 42 | 52 | 75 | 35 |
| | X1956A | / | 42 | / | / | / | / | / | / | / | / |
| Special polypropylene B | C5608 | 5 | 5 | / | 5 | 5 | 5 | 5 | 3 | 10 | 8 |
| | ADSYL 6089 | / | / | 5 | / | / | / | / | / | / | / |
| UHMWPE | U010P | 2.7 | 2.7 | 2.7 | / | 2.7 | 6 | 6 | 1.8 | 3 | 3 |
| | 9300GK1 | / | / | / | 2.7 | / | / | / | / | / | / |
| Metallocene ethylene-propylene copolymer | Vistamaxx 6202 | 0.3 | 0.3 | 0.3 | 0.3 | / | 1.2 | 3 | 0.2 | 1 | 1 |
| | Vistamaxx3980FL | / | / | / | / | 0.3 | / | / | / | / | / |
| Ethylene-octene random copolymer | Engage 8842 | 20 | 20 | 20 | 20 | 20 | 20 | 20 | 20 | 15 | 25 |
| Talcum powder | HTPultraSL | 25 | 25 | 25 | 25 | 25 | 25 | 25 | 15 | 15 | 30 |
| Antioxidant | 1010 | 0.1 | 0.1 | 0.1 | 0.1 | 0.1 | 0.1 | 0.1 | 0.1 | 0.1 | 0.2 |
| | 168 | 0.1 | 0.1 | 0.1 | 0.1 | 0.1 | 0.1 | 0.1 | 0.1 | 0.1 | 0.2 |
| Photo stabilizer | UV-3808PP5 | 0.1 | 0.1 | 0.1 | 0.1 | 0.1 | 0.1 | 0.1 | 0.1 | 0.3 | 0.1 |
| Lubricant | BS-2818 | 0.1 | 0.1 | 0.1 | 0.1 | 0.1 | 0.1 | 0.1 | 0.3 | 0.1 | 0.1 |

### Comparative examples 1-5

The present comparative examples provide a series of polypropylene composite materials, and formulas of the materials are shown as Table 2.

**Table 2 Formulas of comparative examples 1-5**

| Comparative Example | | 1 | 2 | 3 | 4 | 5 |
|---|---|---|---|---|---|---|
| Special polypropylene A | BI871 | / | 42 | 42 | 42 | 42 |
| Special polypropylene B | C5608 | 5 | / | 5 | 5 | 5 |
| Ordinary co-polypropylene | EP648U | 42 | 5 | / | / | / |
| UHMWPE | U010P | 2.7 | 2.7 | / | / | 2.7 |
| Metallocene ethylene-propylene copolymer | Vistamaxx 6202 | 0.3 | 0.3 | / | 0.3 | / |
| Ethylene-octene random copolymer | Engage 8842 | 20 | 20 | 20 | 20 | 20 |
| Talcum powder | HTPultra5L | 25 | 25 | 25 | 25 | 25 |
| Antioxidant | 1010 | 0.1 | 0.1 | 0.1 | 0.1 | 0.1 |
| | 168 | 0.1 | 0.1 | 0.1 | 0.1 | 0.1 |
| Photo stabilizer | UV-3808PP5 | 0.1 | 0.1 | 0.1 | 0.1 | 0.1 |
| Lubricant | BS-2818 | 0.1 | 0.1 | 0.1 | 0.1 | 0.1 |

Performances of the polypropylene composite materials in the various embodiments and comparative examples were tested according to the above mentioned method; and results are shown as Table 3.

**Table 3 Performance test results of various embodiments and comparative examples**

| Performance | Density/(g/cm³) | Tensile strength/MPa | Bending strength/MPa | Bending modulus/MPa | Notch impact strength of cantilever beam /(KJ/m²) | -35°C low-temperature multi-axis/destruction form |
|---|---|---|---|---|---|---|
| Embodiment 1 | 1.097 | 18.8 | 27.3 | 2035 | 49 | YS |
| Embodiment 2 | 1.092 | 18.3 | 26.0 | 2015 | 50 | YD |
| Embodiment 3 | 1.093 | 18.7 | 27.1 | 2120 | 46 | YS |
| Embodiment 4 | 1.099 | 18.1 | 25.2 | 2001 | 48 | YS |
| Embodiment 5 | 1.093 | 18.8 | 26.8 | 2170 | 49 | YD |
| Embodiment 6 | 1.089 | 18.2 | 26.9 | 2010 | 51 | YD |
| Embodiment 7 | 1.095 | 17.7 | 24.5 | 1890 | 53 | YD |
| Embodiment 8 | 1.099 | 18.1 | 27.0 | 2020 | 46 | YS |
| Embodiment 9 | 1.051 | 18.2 | 26.7 | 1975 | 48 | YS |
| Embodiment 10 | 1.075 | 18.3 | 28.1 | 1890 | 52 | YD |
| Comparative example 1 | 1.096 | 17.2 | 26.7 | 1780 | 42 | YS |
| Comparative example 2 | 1.088 | 16.5 | 24.4 | 1655 | 35 | YU |
| Comparative example 3 | 1.089 | 16.3 | 21.6 | 1475 | 37 | YU |
| Comparative example 4 | 1.097 | 16.3 | 22.1 | 1590 | 39 | NY |
| Comparative example 5 | 1.096 | 16.7 | 23.9 | 1788 | 43 | YD |

It can be seen from Table 3 that, all the polypropylene composite materials prepared in the embodiments 1-10 of the present invention have excellent mechanical property and low-temperature impact resistance. In the embodiments 6 and 7, when a mass ratio of the ultrahigh molecular weight polyethylene to the metallocene ethylene-propylene copolymer in the special toughening agent is regulated, although the low-temperature multi-axis performance can meet the requirement, rigidity (tensile strength, bending strength and bending modulus) of the prepared polypropylene composite material will be slightly decreased.

Further, through comparison of the embodiment 1 and the comparative examples 1-5, after any of the major components in the formula is replaced, the comprehensive performance of the material cannot meet requirements of the automotive bare column material.

In the comparative example 1, after the special polypropylene A is replaced with the ordinary polypropylene, although the low-temperature multi-axis performance can meet the requirement, the bending modulus is significantly decreased. In the comparative example 2, after the special polypropylene B is replaced with the ordinary polypropylene, the low-temperature multi-axis performance cannot meet the requirement; the tensile strength, the bending strength, the bending modulus and the notch impact strength of the cantilever beam are all significantly decreased; and the rigidity and low-temperature toughness are decreased. In the comparative example 3, no special toughening agent is added; the tensile strength, the bending modulus and the notch impact strength of the cantilever beam are all significantly decreased; the rigidity is sharply decreased; and the low-temperature multi-axis performance cannot meet the requirement.

In the comparative example 4, only the metallocene ethylene-propylene copolymer is added to serve as the special toughening agent; the low-temperature multi-axis performance cannot meet the requirement; and the rigidity (the tensile strength, the bending strength and the bending modulus) is significantly decreased compared with that in the embodiments. Further, in the comparative example 5, only the ultrahigh molecular weight polyethylene serves as the special toughening agent; and although the low-temperature multi-axis performance can meet the requirement, the rigidity is also significantly decreased compared with that in the embodiments. Therefore, it shows that, when the ultrahigh molecular weight polyethylene and the metallocene ethylene-propylene copolymer are compounded according to the specific ratio, the comprehensive performances of the polypropylene composite material can be synergistically increased. Thus, the composite material has excellent rigidity and low-temperature cracking performance.

Finally, it should be noted that the above embodiments are only used for describing, rather than limiting the technical solution of the present invention. Although the present invention is described in detail with reference to the preferred embodiments, those ordinary skilled in the art shall understand that the technical solution of the present invention can be amended or equivalently replaced without departing from the spirit and the scope of the technical solution of the present invention.

## Claims

1. A polypropylene composite material, comprising the following components in parts by weight:
35 - 75 parts of special polypropylene A,
3-10 parts of special polypropylene B,
15 - 30 parts of a filler,
2-10 parts of a special toughening agent,
15 - 25 parts of a toughening agent,
0.1 - 0.3 part of a lubricant,
0.1 - 0.3 part of a photo stabilizer, and
0.2 - 0.6 part of an antioxidant, wherein
the special polypropylene A is binary block co-polypropylene synthesized from ethylene and propylene;
the special polypropylene B is ternary random co-polypropylene synthesized from 1-butene, ethylene and propylene;
the special toughening agent comprises ultrahigh molecular weight polyethylene and a metallocene ethylene-propylene copolymer according to a mass ratio of (2-9):1, wherein the molecular weight of the ultrahigh molecular weight polyethylene is not less than 1 million.

2. The polypropylene composite material according to claim 1, wherein the molecular weight of the ultrahigh molecular weight polyethylene is 1 - 3 million.

3. The polypropylene composite material according to claim 1, wherein the metallocene ethylene-propylene copolymer has an ethylene content of 9 - 15%.

4. The polypropylene composite material according to claim 1, wherein the special polypropylene A has a polydispersity index PDI of 6 - 10.

5. The polypropylene composite material according to claim 1, wherein the special polypropylene B has a melting temperature of 130°C - 135°C.

6. The polypropylene composite material according to claim 1, wherein a mass ratio of the ultrahigh molecular weight polyethylene to the metallocene ethylene-propylene copolymer in the special toughening agent is (8 - 9):1.

7. The polypropylene composite material according to claim 1, wherein the filler is one or more of basic magnesium sulfate whisker and talcum powder; and the toughening agent is one or more of an ethylene-octene random copolymer and an ethylene-octene block copolymer.

8. The polypropylene composite material according to claim 1, wherein the lubricant is one or more of amides and stearates; the antioxidant is a hindered phenol or a phosphite ester; and the photo stabilizer is a hindered amine.

9. A preparation method of the polypropylene composite material according to any one of claims 1-8, comprising the following steps: weighing the special polypropylene A, the special polypropylene B, the special toughening agent, a conventional toughening agent, the photo stabilizer, the lubricant and the antioxidant to be uniformly mixed; then adding the filler; and after the components are uniformly mixed, performing melt blending, extruding and granulating on the obtained mixture.

10. Use of the polypropylene composite material according to any one of claims 1-8 in preparation of an automotive bare column material.
